# EUROPEAN PATENT APPLICATION

(11) **EP 1 669 757 A1**
(43) Date of publication of application: **14.06.2006**
(21) Application number: 04772790.4
(22) Date of filing: 03.09.2004
(51) Int. Cl.: G01N 33/53, G01N 37/00

(54) **SYSTEM FOR REACTING BIOLOGICAL MATERIAL**

(30) Priority: 24.09.2003 JP 2003332128
(71) Applicant: Olympus Corporation, Tokyo 151-0072 (JP)
(72) Inventor: MATSUO, Yuichiro, OLYMPUS INT. PROP. SERVICES CO., Hachioji-shi, Tokyo 192-8512 (JP)
(74) Representative: von Hellfeld, Axel
(86) International application number: PCT/JP2004/012841
(87) International publication number: WO 2005/029074

(57) **Abstract**

A reaction apparatus includes an incubator (200) that houses and holds a reaction vessel (100), a pump (600) that drives a reaction solution containing a biorelated substance in the reaction vessel (100), a reaction solution driving tube (400) that transfers variations in pressure from the pump (600) to a reaction solution, and a pressure sensor (500) that detects the pressure state of the reaction solution driving tube (400).

## Description

### Technical Field

The present invention relates to a light measurement apparatus and method that are used for the tests of biorelated substances such as genes and read a microarray chip used for DNA analysis, epidemiological analysis, and the like and, more specifically, measure fluorescence or the like from the microarray chip.

### Background Art

Recent technical developments in the gene engineering field are remarkable. For example, studies have been made to decipher human genome base sequences considered to amount to 100,000.

On the other hand, a microarray technique is used for studies for searching for DNAs that have influences on various kinds of hereditary diseases in, for example, enzyme immunoassay methods and fluorescence antibody methods that are used for various kinds of diagnoses and use antigen-antibody reactions.

The microarray technique is a technique that uses a microarray chip obtained by spotting cDNAs or oligo DNAs in the form of a matrix at a high density (intervals of several hundred µm or less) as probes on an Si wafer, slide glass, or membrane filter.

In such a microarray technique, for example, a DNA that is labeled with a fluorescent dye and is extracted from a cell of an able-bodied person or a DNA that is labeled with a fluorescent dye and extracted from a cell of a test body having a heredity disease is dropped on each probe of the microarray chip by using a pipette. The DNA of each test body and a probe are hybridized, and excitation light for exciting each fluorescent dye is applied to each probe in this state, and fluorescence emitted from each probe is detected by a photodetector. Thereafter, a specific probe with which the DNA of each test body is hybridized is obtained from the result of fluorescence detection on the microarray chip. In addition, by comparing hybridized DNAs, a DNA that has expressed due to a disease or a defective DNA is specified.

PCT (WO) 2003-509663 discloses an analysis-test apparatus having a substrate that orientates each through channel, a method therefor, and equipment using the apparatus. International Publication WO03/027673 brochure discloses a genetic testing apparatus and a target nucleic acid detection method.

### Disclosure of Invention

In the apparatus disclosed in PCT (WO) 2003-509663, if the substrate has cracked when a pressure difference is applied to it, the capillary pressure of each channel in the substrate greatly decreases. For this reason, the flow of a sample passing through the substrate cannot be stopped, and the sample drops in the form of droplets. Since this apparatus has no means for detecting such an abnormal situation, it cannot warn the user of the abnormal situation or perform proper processing upon stopping the operation.

In the apparatus disclosed in International Publication WO03/027673 brochure, in order to make a reaction solution pass through the substrate, a pressure difference is applied to the substrate by a pump driver through a piping system. If, for example, a problem such as clogging occurs in the piping system, a proper pressure difference cannot be applied to the substrate. As a consequence, a sample cannot sufficiently pass through the substrate, and proper analysis, e.g., hybridization, cannot be done. However, this apparatus has no means for detecting such an abnormal situation, and hence cannot warn the user of an abnormal situation or perform proper processing upon stopping the operation.

The present invention has been made in consideration of such situations, and has as its object to provide a reaction apparatus for living organ related substances that can detect an abnormal situation in a piping system.

The present invention is directed to, for example, a reaction apparatus for living organ related substances. A reaction apparatus of the present invention comprises reaction solution driving means for driving a reaction solution that is provided for a reaction chip and contains a biorelated substance, a pressure transfer medium that is located between the reaction chip and the reaction solution driving means and transfers a pressure variation from the reaction solution driving means to the reaction solution, and pressure detection means for detecting a pressure state of the pressure transfer medium.

### Brief Description of Drawings

FIG. 1 shows a reaction vessel applied to a reaction apparatus according to an embodiment of the present invention;
FIG. 2 shows a reaction chip housed in the reaction vessel shown in FIG. 1;
FIG. 3 schematically shows the arrangement of the reaction apparatus according to the embodiment of the present invention;
FIG. 4 shows a sectional view of the incubator and reaction vessel shown in FIG. 3;
FIG. 5 shows the internal arrangement of the control unit shown in FIG. 3;
FIG. 6 shows variations in pressure inside a reaction solution driving tube when a pump is operated;
FIG. 7A shows variations in pressure in the reaction solution driving tube while reaction solution driving operation is not normally performed due to a crack in a solid-phase carrier of a reaction chip;
FIG. 7B shows variations in pressure in the reaction solution driving tube while reaction solution driving operation is normally performed; and
FIG. 8 shows changes in pressure in the reaction solution driving tube while clogging or the like occurs in a conduit.

### Best Mode for Carrying Out the Invention

An embodiment of the present invention will be described below with reference to the views of the accompanying drawing.

### First Embodiment

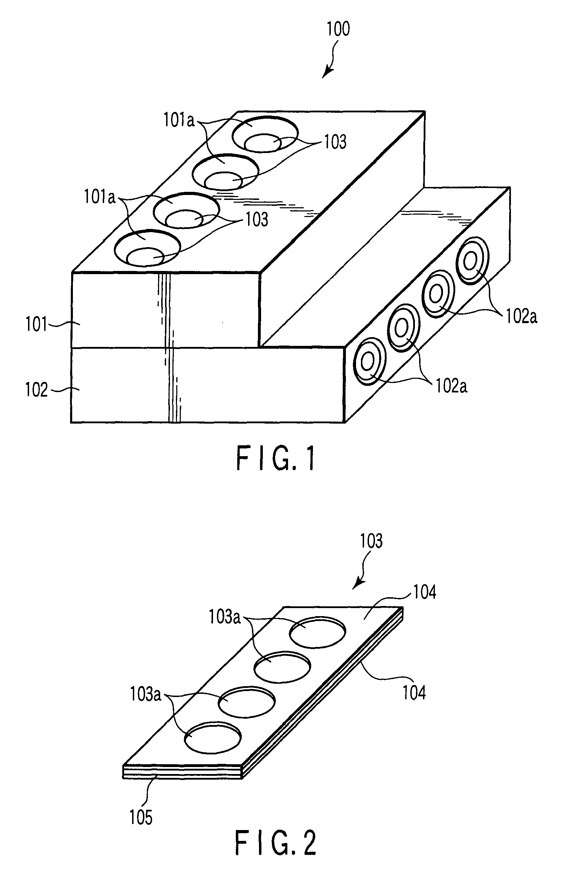

This embodiment is directed to a reaction apparatus for living organ related substances such as genes. FIG. 1 shows a reaction vessel applied to the reaction apparatus according to the embodiment of the present invention. FIG. 2 shows a reaction chip housed in the reaction vessel shown in FIG. 1.

As shown in FIG. 1, a reaction vessel 100 has an upper vessel half 101 and a lower vessel half 102, which clamp and hold a reaction chip 103. The upper vessel half 101 and the lower vessel half 102, which are of polycarbonate, are fixed to each other by a proper technique using screws, an adhesive, or the like to hold the reaction chip 103.

The upper vessel half 101 has reaction solution storage portions 101a, which store a reaction solution containing a biorelated substance to be tested. The reaction vessel 100 in this embodiment has four reaction solution storage portions 101a. However, the number of reaction solution storage portions is not limited to four. For example, one reaction solution storage portion may be provided. The lower vessel half 102 has, on its side surface, connection portions 102a that transfer pressure for driving the reaction solution.

The reaction chip 103 shown in FIG. 2 is, for example, a DNA chip for DNA tests, but is not limited to this, and includes any kinds of chips for widely testing biorelated substances. The reaction chip 103 comprises a solid-phase carrier 105 and two support members 104 bonded to the upper and lower surfaces of the solid-phase carrier 105. The two support members 104 have openings at positions corresponding to each other. Those portions of the solid-phase carrier 105 which are exposed from the openings of the support members 104 form reaction portions provided for reaction with a biorelated substance to be tested. The reaction portions are provided with spots, each of which has probes for capturing a specific biorelated substance. The solid-phase carrier 105 has many fine holes extending through up and down, and the probes are fixed in the respective holes.

In this specification, "biorelated substances" include not only cells of animals, plants, microorganisms, and the like but also substances originating from viruses that cannot proliferate by themselves unless parasitizing such cells. Biorelated substances include substances in natural forms that are directly extracted/isolated from these cells, substances produced by using a gene optical technique, and chemically modified substances. More specifically, biorelated substances include hormones, enzymes, antibodies, antigens, abzymes, other proteins, nucleic acids, and the like.

In addition, a "probe" means a substance that specifically binds with the above biorelated substance, and includes any one of substances in the following relationships: a ligand such as a hormone and its acceptor, an enzyme and its substrate, an antigen and its antibody, a nucleic acid having a specific sequence and a nucleic acid having a sequence complementary thereto, and the like.

The solid-phase carrier 105, positioned between the upper vessel half 101 and the lower vessel half 102, allows the passage of the reaction solution stored in the reaction solution storage portion 101a. That is, the reaction solution stored in the reaction solution storage portion 101a can pass through the solid-phase carrier 105 of the reaction chip 103 to flow back and forth between the upper vessel half 101 and the lower vessel half 102.

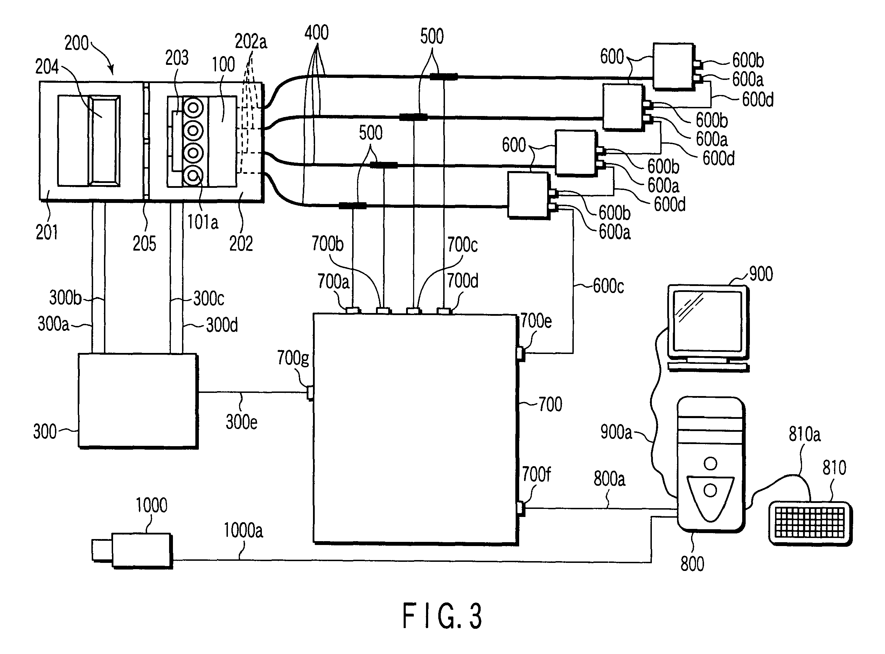

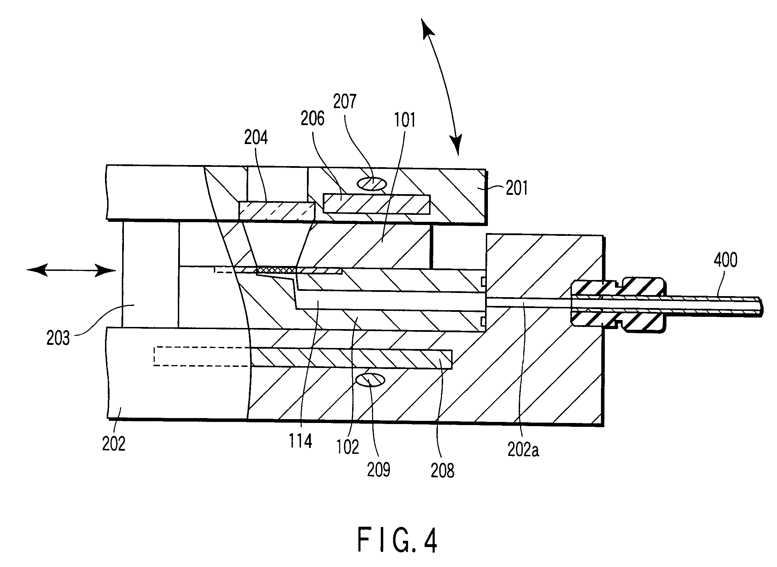

FIG. 3 schematically shows the arrangement of the reaction apparatus according to the embodiment of the present invention. FIG. 4 shows a sectional view of the incubator and reaction vessel shown in FIG. 3.

The reaction apparatus comprises an incubator 200, which houses and holds the reaction vessel 100, a pump 600 serving as a driving means for driving the reaction solution containing an biorelated substance in the reaction vessel 100, a reaction solution driving tube 400, which is a pressure transfer medium to transfer pressure variations from the pump 600 to the reaction solution, and a pressure sensor 500, which is a pressure detection means for detecting the pressure state of the reaction solution driving tube 400.

The incubator 200 has a function of keeping the temperature of the reaction vessel 100 at a predetermined temperature in order to induce a reaction in the reaction vessel 100 or control a reaction in the reaction vessel 100.

The incubator 200 is divided into an upper incubator 201 and a lower incubator 202 that are foldably coupled to each other through a hinge 205 so as to be unfolded and folded through the hinge 205. FIG. 3 shows a state wherein the incubator 200 is unfolded. FIG. 4 shows a state wherein the incubator 200 is folded.

The lower incubator 202 has a recess that can house the reaction vessel 100. When the operator sets the reaction vessel 100 in the recess of the lower incubator 202 and tilts a set lever (not shown) to the "mount" side, a pressure arm 203 acts to press the reaction vessel 100 against the incubator wall surface, thereby setting the reaction vessel 100.

The upper incubator 201 has a cover glass 204 functioning as an optical window. When the upper incubator 201 is folded to overlap the lower incubator 202, the cover glass 204 is located immediately above the reaction solution storage portion 101a of the reaction vessel 100 and comes into tight contact therewith. With this structure, the reaction state of a spot exiting on the solid-phase carrier 105 of the reaction chip 103 can be measured from above the incubator 200 by an optical system (not shown) such as a microscope and a CCD camera 1000.

The CCD camera 1000 is built into an optical system (not shown) installed between the incubator 200 and a computer 800 and is electrically connected to the computer 800 through a dedicated cable 1000a. The computer 800 comprises a camera interface PCI board (not shown), and issues an image sensing instruction to the CCD camera 1000 or captures a sensed image.

The upper incubator 201 incorporates a heater 206 and a resistance temperature sensor 207. The heater 206 and the resistance temperature sensor 207 are connected to a thermoregulator 300 through signal lines 300a and 300b, respectively. Likewise, the lower incubator 202 incorporates a heater 208 and a resistance temperature sensor 209. The heater 208 and the resistance temperature sensor 209 are connected to the thermoregulator 300 through the signal lines 300a and 300b, respectively.

The thermoregulator 300 controls the heaters 206 and 208 on the basis of the information obtained by the resistance temperature sensors 207 and 209 so as to keep the temperature of the reaction vessel 100 held in the incubator 200 at a designated temperature. The heater 206, resistance temperature sensor 207, heater 208, resistance temperature sensor 209, and thermoregulator 300 in the incubator 200 constitute a temperature control means for controlling the temperature of the reaction solution.

The reaction solution driving tubes 400 are connected to the lower incubator 202. A pressure transfer tunnel 202a is formed to extend from the connection end of each reaction solution driving tube 400 into the lower incubator 202, and is connected to the connection portion 102a formed on a side surface of the lower vessel half 102 of the reaction vessel 100. The reaction solution driving tubes 400 are filled with pure water.

The pressure sensor 500 is connected inside each of the conduits of the reaction solution driving tubes 400. The pressure sensor 500 is a pressure sensor of the gage pressure type that detects a pressure difference from the current pressure, and can measure pressures of -100 kPa to 100 kPa. More specifically, this sensor operates at a supply voltage of 5 V and outputs 2.48 V when it is placed under atmospheric pressure on its specifications, and the voltage of the sensor rises by 22.5 mV per kPa (up to 4.73 V at 100 kPa) under positive pressure, and drops by 22.5 mV per kPa (up to 0.23 V at -100 kPa) under negative pressure.

The pressure sensors 500 are connected to a control unit 700 through connection cables and connectors 700a to 700d. These connection cables are used to supply power to the pressure sensors 500 and interface output signals.

The pump 600 is connected to one end of the reaction solution driving tube 400. The pump 600 incorporates a 250-µL capacity injection syringe (not shown) and a syringe operation motor, and can suck a pressure transfer medium in the reaction solution driving tube 400 in increments of 1 µL within the range of 1 to 250 µL and transfer the pressure to the reaction vessel 100.

The pump 600, which operates at a supply voltage of 24 V, incorporates a communication interface circuit (not shown) and a CPU for overall control. Communication connectors 600a and 600b and communication lines 600c and 600d are daisy-chained into one communication line to allow a maximum of 16 pumps 600 to be operated. In this embodiment, the pumps 600 are designed to communicate by RS-232C (9,600 bps).

The thermoregulator 300 can perform temperature control on the two heaters 206 and 208, and can communicate temperature setting information, current temperature information, and the like associated with the heaters through a communication line 300e by RS-232C (9,600 bps). The computer 800 is connected to a keyboard 810 through a cable 810a. Upon receiving various conditions (a temperature, the number of times of reaction solution driving operation, the number of times of image sensing operation with the CCD camera, and the like) for the hybridization of the reaction solution, which are input by the operator through the keyboard 810, the computer 800, for example, drives the respective constituent devices on the basis of instruction values and notifies the operator of the current state of hybridization.

The computer 800 is connected to a monitor 900 through a cable 900a. The monitor 900 displays a hybridization condition setting window by dedicated control software or a hybridization state. The computer 800 is connected to the control unit 700 through an RS-232C communication line 800a.

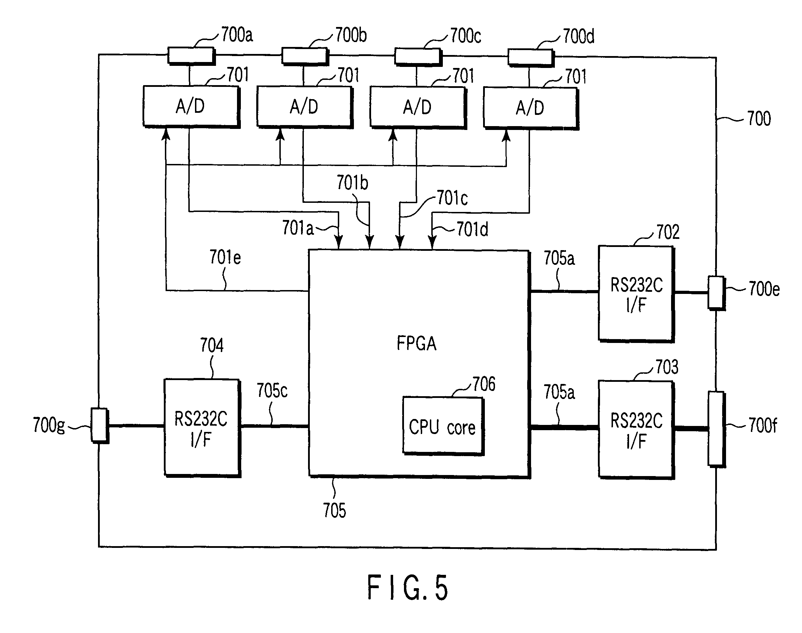

FIG. 5 shows the internal arrangement of the control unit 700 shown in FIG. 3. As shown in FIG. 5, an FPGA 705 is mounted in the central portion of the control unit 700. The FPGA 705 is a semiconductor device whose internal circuit can be freely designed and rewritten, and can incorporate a soft-macro CPU core 706 as well as a ROM, RAM, and user logic.

The FPGA 705 in this embodiment is an FPGA available from ALTERA, which is equipped with a Nios (registered trademark) processor, which is a soft-macro CPU. Building the CPU core 706 in the FPGA 705 makes it possible to be free from the influences of the discontinuation of production as in the case of existing CPUs and freely set/change the number of UARTs. This can also realize a multiprocessor mode having two or more CPUs arranged in an FPGA so as to meet future requirements for feature expansion and an increase in operation speed.

In this embodiment, the CPU core 706 performs command transmission/reception in RS-232C communication with the computer 800, RS-232C communication with the pumps 600, and RS-232C communication with the thermoregulator 300.

A/D converters 701 are for converting voltages output from the pressure sensors 500 into 8-bit digital data. In this embodiment, voltages output from the pressure sensors 500 are respectively received by the connectors 700a to 700d and converted into digital data by the A/D converters 701. The resultant 8-bit data are input to the FPGA 705 through signal lines 701a to 701d. A signal 701e output from the FPGA 705 is an A/D clock having a frequency of 1 kHz. The FPGA 705 performs control to output the A/D clock 701e only when a voltage from the pressure sensor 500 is required and perform A/D conversion.

RS-232C interface ICs 702, 703, and 704 are for interfacing between CMOS voltages and RS-232C voltages. Since signals 705a, 705b, and 705c on the FPGA 705 side are at the CMOS level and connectors 700e, 700f, and 700g are at the RS-232C level, these interface ICs provide interface for the voltage difference between them.

A specific example of the operation of the reaction apparatus according to this embodiment having the above arrangement will be described below.

The operator turns on the main switch (not shown) to activate the respective devices of the reaction apparatus for biorelated substances and make them initialize by themselves. In addition, the operator unfolds the incubator 200 and places the reaction vessel 100 on the lower incubator 202. The operator tilts the set level to the "mount" side. The pressure arm 203 then presses the reaction vessel 100 against a side surface of the lower incubator 202, thereby completely setting the reaction vessel 100. The operator folds the upper incubator 201 to cover the lower incubator 202.

Subsequently, the operator sets hybridization conditions by using the keyboard 810 of the computer 800 and the monitor 900. When this operation is complete, the operator issues an instruction to start hybridization by using the keyboard 810.

Upon receiving the instruction to start hybridization, the computer 800 sends out operation parameters for the respective devices to the control unit through the communication line 800a. In the control unit 700 that has received the operation parameters from the computer 800, the CPU core 706 in the FPGA 705 operates to send out set temperatures of the incubator 200 (set temperatures of the upper incubator 201 and lower incubator 202) to the thermoregulator 300 through the communication line 705c, RS-232C interface IC 704, connector 700g, and communication line 300e.

When the control unit 700 receives a parameter reception completion command and the current temperature data of the upper incubator 201 and lower incubator 202 from the thermoregulator 300, the CPU core 706 operates to send out the size of the syringe incorporated in each pump, the operating minimum resolution, a driving current value for each syringe driving motor, and the like through the communication line 705a, RS-232C interface IC 702, connector 700e, and communication line 600c.

In this embodiment, as shown in FIG. 3, the four pumps 600 are daisy-chained, and "a", "b", "c", and "d" are automatically assigned as IDs for pump identification to the pumps in increasing order of distance from the communication line 600c. When, therefore, the pump located nearest to the communication line 600c is to be operated, "a" + "command" are sent out. When the four pumps are to be simultaneously operated, "a" + "command" + "b" + "command" + "c" + "command" + "d" + "command" are continuously transmitted.

Upon receiving parameter reception completion commands from all the pumps 600, the control unit 700 continuously and repeatedly receives current temperature data of the upper incubator 201 and lower incubator 202 from the thermoregulator 300. The control unit 700 continuously transmits the current temperature data of the upper incubator 201 and lower incubator 202 to the computer 800.

The computer 800 keeps receiving this data and is set in a standby state while displaying the message "Please wait until the set temperature is reached" or the like on the screen of the monitor 900 until the temperature set by the operator is reached.

When the set temperature is reached, the computer 800 sends out, to the control unit 700, commands to cause the four pumps 600 to perform 50-µL suction operation so as to perform hybridization in the reaction vessel 100. Upon receiving the commands, the control unit 700 sends out commands to the pumps 600 to cause them to operate on the basis of instructions from the computer 800. At the same time, the FPGA 705 in the control unit 700 sends out the A/D clocks 701e to the A/D converters 701 to cause them to A/D-convert voltages representing the pressures in the conduits that are output from the pressure sensors 500. At the same time, the FPGA 705 receives digital data 701a to 701d sent out from the A/D converters 701.

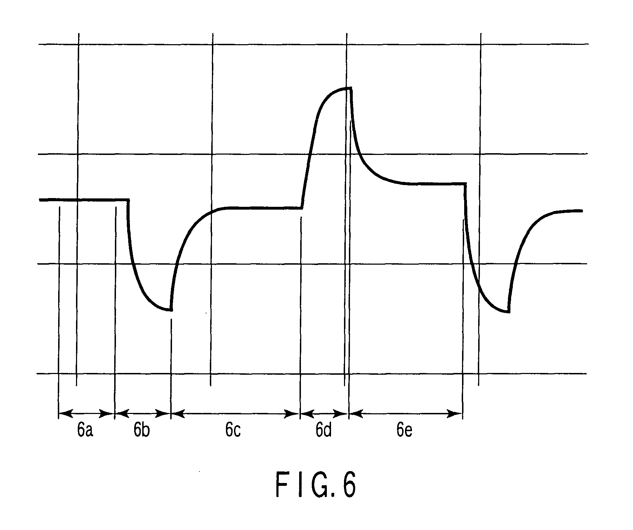

FIG. 6 shows variations in pressure in the reaction solution driving tube 400 when the pump is operated. Referring to FIG. 6, a state 6a is set before the start of the operation of the pump 600. In this state, the internal pressure of the reaction solution driving tube 400 is equal to atmospheric pressure. The pressure sensor 500 outputs 2.48 V (reference voltage) under atmospheric pressure according to the specifications.

Referring to FIG. 6, a state 6b is a state wherein the pump 600 is performing suction operation. As the suction operation proceeds, the pressure in the reaction solution driving tube 400 decreases. At this time, the FPGA 705 of the control unit 700 sends out the A/D clock 701e to the A/D converter 701, converts a voltage output from the pressure sensor 500 into digital data in real time, and receives the data. Subsequently, the CPU core 706 calculates an actual pressure by subtracting the digital data currently obtained by A/D conversion from the reference voltage.

At the current point of time, the subtraction result is a voltage value. The magnitude of the voltage value as the subtraction result may be regarded as a pressure, and changes in pressure may be monitored. Alternatively, since it is known that a voltage change of 22.5 mV occurs per Kpa, as described above, the calculated voltage value may be divided by 22.5 mV to handle the actual pressure in kPa. In this embodiment, in order to increase the computation speed, the voltage value obtained by subtraction is used without performing any division.

When the suction operation of the pump 600 is complete, a state 6c in FIG. 6 is set. In the state 6c, the pressure in the reaction solution driving tube 400 that has been a high negative pressure gradually returns to atmospheric pressure as the reaction solution moves. When the pressure approximately reaches atmospheric pressure at the final stage in the state 6c, the movement of the reaction solution ends.

Subsequently, when the pump 600 starts evacuation operation, a state 6d is set, and the pressure gradually increases. At this time, the CPU core 706 in the FPGA 705 calculates an actual pressure by subtracting the digital data currently obtained by A/D conversion from the reference voltage. Note, however, that subtraction is performed according to (digital data currently obtained by A/D conversion) - (reference voltage). This is because, since the pump 600 performs evacuation operation, a positive pressure is produced inside the reaction solution driving tube 400. The CPU core 706 changes computation in accordance with the current operation state of the pump 600.

When the evacuation operation of the pump 600 is complete, a state 6e in FIG. 6 is set, and the pressure gradually reaches atmospheric pressure. At this time, the reaction solution slowly returns to the reaction solution storage portion 101a of the upper vessel half 101 of the reaction vessel 100. When normal reaction solution driving operation is performed, variations in pressure occur as shown in FIG. 6.

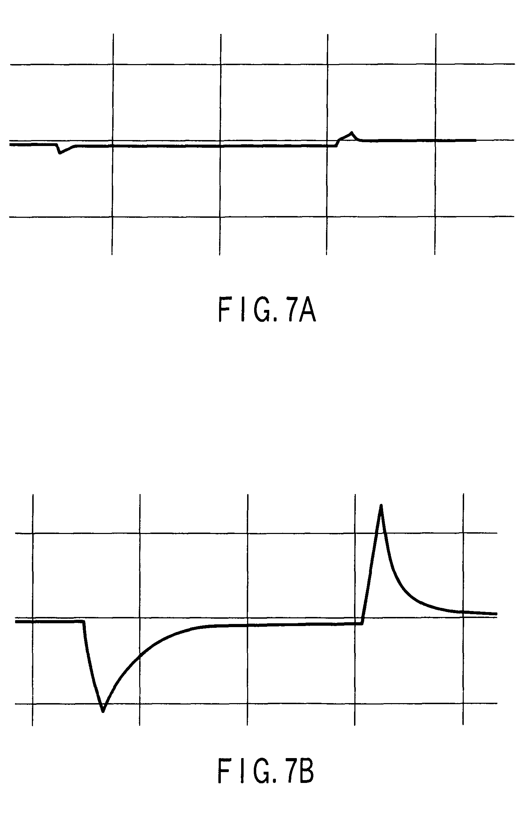

If the solid-phase carrier 105 of the reaction chip 103 inside the reaction vessel 100 cracks and a large amount of reaction resolution leaks from the crack in the solid-phase carrier 105 of the reaction chip 103, the pressure in the reaction solution driving tube 400 almost ceases to rise as shown in FIG. 7A. FIG. 7B shows variations in pressure in the reaction solution driving tube 400 in a state wherein no crack is produced in the solid-phase carrier 105 of the reaction chip 103 and reaction solution driving is normally performed.

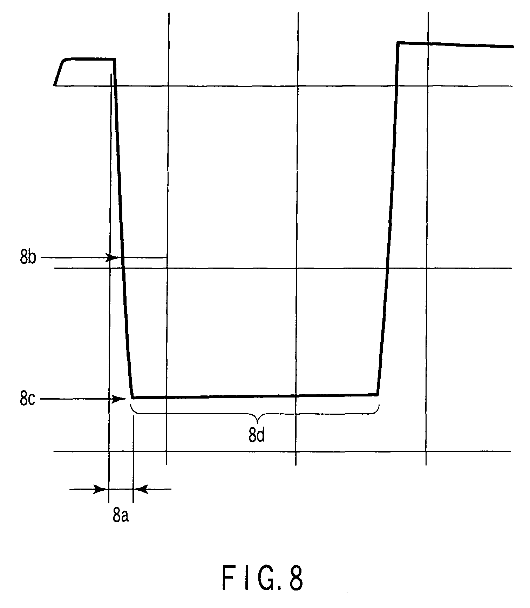

FIG. 8 shows variations in pressure in the reaction solution driving tube 400 while clogging or the like occurs in the conduit. Referring to FIG. 8, a state 8a indicates a period during which the pump 600 performs suction operation. In a normal state wherein there is no problem in the solid-phase carrier 105 of the reaction chip 103 inside the reaction vessel 100, when the pump 600 stops 50-µL suction operation, an output voltage from the pressure sensor 500 does not become equal to or lower than a voltage 8b. If, however, clogging or the like occurs in the conduit, the pressure in the reaction solution driving tube 400 becomes much lower than the normal pressure, and the output voltage from the pressure sensor 500 drops to a voltage 8c. That is, the pressure in the reaction solution driving tube 400 becomes much lower than the normal pressure.

In addition, after the pump 600 stops 50-µL suction operation as well, the output voltage from the pressure sensor 500 does not change as indicated by a state 8d. That is, the pressure is kept decreased and does not return to near atmospheric pressure.

The pressure value of the reaction solution driving tube 400 that is set when suction operation is normally complete and the pump is stopped at the time of mounting of the reaction vessel 100 is stored as (reference voltage) - (output voltage from pressure sensor when pump is stopped) in a memory (not shown) in the FPGA 705 of the control unit 700. In addition, the pressure value of the reaction solution driving tube 400 that is set when evacuation operation is normally complete and the pump is stopped at the time of mounting of the reaction vessel 100 is stored as (output voltage from pressure sensor when pump is stopped) - (reference voltage) in the memory.

More specifically, the pressure value (voltage) set at the time of normal suction operation is 0.191 V to 0.233 V (in consideration of variations), and the output value (voltage) set at the time of normal evacuation operation is 0.285 V to 0.32 V (in consideration of variations). Therefore, at the time of suction operation, the FPGA 705 in the control unit 700 performs computation with the reference voltage on the basis of the digital data 701a to 701d sent out from the A/D converter 701 at the same time when the 600 starts operating, and keeps comparing the computation result with the voltage values stored in the memory.

If the computation result falls within the range of 0.191 V to 0.233 V when the pump 600 finishes 50-µL suction operation, the control unit 700 judges that a normal state is set. The control unit 700 then returns a normal termination command to the computer 800.

If, however, the computation result falls within the range of 0 to 0.190 V even after the end of the 50-µL suction operation of the pump 600, since it indicates that the pressure has not decreased below the specified value, the control unit 700 returns, to the computer 800, an abnormal termination command indicating the occurrence of pressure leakage in the conduit, a crack in the solid-phase carrier 105 of the reaction chip 103, or a failure to mount the reaction vessel 100 in the incubator 200. Upon receiving this command, the computer 800 displays the message "A pressure abnormality has occurred. Please check the occurrence of a crack in the chip, a mount failure in the incubator, or pressure leakage in the piping system" or the like on the monitor 900 to call attention to the operator.

In contrast, if the computation result is equal to or more than 0.234 V even when the pump 600 finishes 50-µL suction operation, since it indicates that the pressure has decreased below the specified value, the control unit 700 returns, to the computer 800, an abnormal termination command indicating that clogging has occurred in the conduit. Upon receiving this command, the computer 800 displays the message "A pressure abnormality has occurred. Please check whether clogging has occurred in the piping system" or the like on the monitor 900 to call attention to the operator.

When pump evacuation operation is to be performed, a similar algorithm is used. In evacuation operation, if the computation result falls within the range of 0.285 V to 0.32 V when the 600 finishes 50-µL evacuation operation, the control unit 700 judges that a normal state is set, and returns a normal termination command to the computer 800.

If the computation result falls within the range of 0 to 0.285 V even after the end of the 50-µL evacuation operation of the pump 600, since it indicates that the pressure has not increased above the specified value, the control unit 700 returns, to the computer 800, an abnormal termination command indicating the occurrence of pressure leakage in the conduit, a crack in the solid-phase carrier 105 of the reaction chip 103, or a failure to mount the reaction vessel 100 in the incubator 200. Upon receiving this command, the computer 800 displays the message "A pressure abnormality has occurred. Please check the occurrence of a crack in the chip, a mount failure in the incubator, or pressure leakage in the piping system" or the like on the monitor 900 to call attention to the operator.

In contrast, if the computation result is equal to or more than 0.33 V even when the pump 600 finishes 50-µL suction operation, since it indicates that the pressure has increased above the specified value, the control unit 700 returns, to the computer 800, an abnormal termination command indicating that clogging has occurred in the conduit. Upon receiving this command, the computer 800 displays the message "A pressure abnormality has occurred. Please check whether clogging has occurred in the piping system" or the like on the monitor 900 to call attention to the operator.

When an abnormality has occurred, the operator can arbitrarily see a log of pressure values at the time of the operation of the pump as a graph on the monitor 900 by operating the keyboard 810.

As described above, the control unit 700 detects the occurrence of a pressure state abnormality by judging the pressure state detected by the pressure sensor 500 at a specific operation timing of the pump 600. The occurrence of a pressure state abnormality is detected by comparing an output value (output voltage) from the pressure sensor 500 with a predetermined reference value (reference voltage). When the occurrence of a pressure state abnormality is detected, the control unit 700 displays a message indicating the occurrence of a pressure state abnormality on the monitor 900 through the computer 800.

If no pressure abnormality has occurred, the pump 600 repeats suction/evacuation operation by a designated number of times to make hybridization proceed, and finally images reaction results with the CCD camera 1000, thereby completing the entire process. The computer 800 controls the CCD camera 1000 to perform image sensing with the CCD camera 1000 in synchronism with a state wherein the pump 600 finishes 50-µL suction operation and the reaction solution is completely gone from the reaction chip 103.

Upon detecting the occurrence of a pressure state abnormality, the control unit 700 restores the pressure state of the pump 600 to the initial state and performs termination processing. At the same time, the control unit 700 may return, to the computer 800, a command to display a message for prompting the interruption of hybridization on the monitor 900.

In this case, the control unit 700 controls the pump 600 on the basis of the pressure state detected by the pressure sensor 500 such that while the pressure state is normal, the pump 600 is driven to continue hybridization, and when a pressure state abnormality is detected, the pump 600 is stopped.

In addition, the pressure state detected by the pressure sensor 500 may be always displayed on the monitor 900.

This embodiment has been described on the assumption that the operation speed of the pump 600 is constant, and the reaction solution permeability of the reaction chip 103 to be used and the viscosity of the reaction solution to be used are constant. Assume that the reaction chips 103 to be used vary in reaction resolution permeability and reaction solutions to be used vary in viscosity. In this case, if the operation speed of the pump 600 is constant, the pressure in the reaction solution driving tube 400 greatly varies depending on the combination of the above values. If the reaction solution permeability of the reaction chip 103 is very high, and the viscosity of a reaction solution is low, no problem arises even when the operation speed of the pump 600 is high. Assume that the reaction solution permeability of the reaction chip 103 is very poor, and the viscosity of a reaction resolution is very high. In this case, if the reaction solution is driven while the operation speed of the pump 600 is kept high, a heavy distortion load acts on the reaction chip 103. In the worst case, the reaction chip 103 may be damaged. If the operation speed of the pump 600 is always kept low to prevent the reaction chip 103 from being damaged even with the combination of the worst reaction solution permeability and the lowest viscosity of a reaction solution, it may take an unnecessarily long period of time for reaction solution driving. By only changing the control program without changing the arrangement of this embodiment, reaction solution driving can be performed such that the operation speed of the pump 600 is changed within a predetermined range so as to make the pressure in the reaction solution driving tube 400 fall within a predetermined range while monitoring the magnitude of the pressure and how it changes.

In the reaction apparatus for biorelated substances, the operator activates each device and performs initialization by turning on the main switch (not shown). At this time, program checking operation for the piping system may be simultaneously performed. More specifically, after the reaction apparatus determines that a reaction vessel is not mounted, the control unit 700 issues an instruction to perform suction operation to the pump 600. At the same time, computation with a reference voltage is performed on the basis of the digital data 701a to 701d sent out from the A/D converter 701, and it is judged whether the computation result is equal to or less than a specified voltage value. If clogging has occurred in the piping system or the pressure transfer medium has deteriorated to have high viscosity, the computed voltage becomes higher than the specified voltage. Since no reaction vessel is mounted, this makes it possible for the reaction apparatus to judge that the piping system is abnormal.

The above embodiment has exemplified the test of a gene reaction using a DNA chip. However, the present invention may be applied to the tests of other biorelated substances using another test chip comprising a substrate on that probes for testing a biorelated substance other than a gene are formed as solid-phase probes, e.g., the test of an immune reaction or the like. In addition, as substrates on that various kinds of probes are formed as solid-phase probes, substrates in various forms can be used. For example, two-dimensional substrates such as silicon and glass substrates, various kinds of beads, various kinds of porous substrates, and various kinds of gels can be used.

Although the embodiments of the present invention have been described with reference to the views of the accompanying drawing, the present invention is not limited to these embodiments. The embodiments can be variously modified and changed within the spirit and scope of the invention.

## Claims

1. A reaction apparatus for biorelated substances, comprising:
reaction solution driving means for driving a reaction solution that is provided for a reaction chip and contains a biorelated substance;
a pressure transfer medium that is located between the reaction chip and the reaction solution driving means and transfers a pressure variation from the reaction solution driving means to the reaction solution; and
pressure detection means for detecting a pressure state of the pressure transfer medium.

2. A reaction apparatus for biorelated substances according to claim 1, further comprising control means for judging a pressure state detected by the pressure detection means to detect the occurrence of a pressure state abnormality.

3. A reaction apparatus for biorelated substances according to claim 2, wherein the control means judges a pressure state at a specific operation timing of the reaction solution driving means.

4. A reaction apparatus for biorelated substances according to claim 2, further comprising display means for displaying the occurrence of the pressure state abnormality.

5. A reaction apparatus for biorelated substances according to claim 2, wherein the control means controls operation of the reaction solution driving means on the basis of the pressure state.

6. A reaction apparatus for biorelated substances according to claim 1, further comprising imaging means for imaging a state during or after a reaction of the biorelated substance.

7. A reaction apparatus for biorelated substances according to claim 1, further comprising temperature control means for controlling temperature of the reaction solution.
